Europäisches Patentamt

European Patent Office

Office européen des brevets

(19)

(11) Numéro de publication: **0 032 855**
**A1**

## DEMANDE DE BREVET EUROPEEN

(12)

(21) Numéro de dépôt: 81400029.5

(22) Date de dépôt: 09.01.81

(51) Int. Cl.³: **G 11 B 5/09**

(30) Priorité: **22.01.80 FR 8001326**

(43) Date de publication de la demande: **29.07.81**
**Bulletin 81/30**

(84) Etats contractants désignés: **AT BE CH DE GB IT LI LU NL SE**

(71) Demandeur: **THOMSON-CSF, 173, Boulevard Haussmann, F-75360 Paris Cedex 08 (FR)**

(72) Inventeur: **de Couasnon, Tristan, THOMSON-CSF - SCPI 173, bld Haussmann, F-75360 Paris Cedex 08 (FR)**

(74) Mandataire: **Turlèque, Clotilde et al, "THOMSON-CSF" - SCPI 173, bld Haussmann, F-75360 Paris Cedex 08 (FR)**

(54) **Dispositif de test pour enregistreur numérique multipiste.**

(57) L'invention se rapporte à un dispositif de test susceptible de tester plusieurs pistes d'un enregistreur à haut débit en parallèle.

Le dispositif de test comporte une partie émission pour l'émission de données vers l'enregistreur à tester et une partie test proprement dit. La partie émission comporte principalement un générateur (101) d'une séquence, pseudo-aléatoire ou en rampe, de nombres binaires formés de plusieurs eb en parallèle. La partie test comporte un dispositif de stockage de données (201) pour mettre en mémoire les données restituées par l'enregistreur testé, un second générateur (202) programmé de la même façon que le premier, un dispositif de comparaison (203) de la séquence restituée et de la séquence émise et un dispositif d'analyse d'erreur (204) délivrant une mesure du taux d'erreur et permettant de localiser les erreurs détectées.

Application, notamment, au test d'enregistreurs numériques multipistes mettant en œuvre une technique de codage sensible à la monotonie des données.

DISPOSITIF DE TEST POUR ENREGISTREUR NUMERIQUE MULTIPISTE

L'invention se rapporte au domaine de l'enregistrement numérique et a plus particulièrement pour objet un dispositif de test pour enregistreur numérique multipiste à haut débit.

Les dispositifs utilisés actuellement pour le test des enregistreurs numériques émettent vers l'enregistreur à tester une séquence pseudo-aléatoire d'éléments binaires, cet enregistrement étant effectué sur une seule piste. La lecture des éléments binaires enregistrés et la comparaison des éléments binaires ainsi restitués avec la séquence pseudo-aléatoire émise donne une valeur du taux d'erreur introduit par l'enregistreur. Cette méthode de mesure, qui reste valable lorsque l'enregistreur est utilisé pour l'enregistrement de données binaires série piste par piste, n'est pas adaptée lorsque l'enregistreur est utilisé sur plusieurs pistes en parallèle et à haut débit (106 MBits par exemple). En effet dans ce cas, il est nécessaire de tester toutes les pistes en parallèle pour obtenir une mesure significative du taux d'erreur par un enregistrement et une lecture qui reproduisent les conditions d'utilisation. De plus, de tels dispositifs de test donnent une mesure globale du taux d'erreur mais ne permettent pas d'interpréter cette mesure. Par exemple, ces dispositifs ne permettent pas de savoir si les erreurs détectées sont des erreurs isolées ou au contraire des erreurs groupées et en quels endroits de la bande magnétique d'enregistrement.

Par ailleurs, comme indiqué ci-dessus, les séquences de test utilisées dans les dispositifs de test classiques sont des séquences pseudo-aléatoires, ce qui donne normalement une valeur du taux d'erreur convenable. Cependant, pour certains types d'enregistreurs, d'autres séquences peuvent conduire à un taux d'erreur détecté plus grand; ce peut être le cas lorsque le type de code utilisé par l'enregistreur présente une faiblesse particulière : par exemple, une configuration binaire dont un seul bit serait changé à chaque enregistrement peut constituer pour l'enregistreur un cas plus défavorable qu'une configuration variant de manière aléatoire. De plus, le code utilisé par l'enregistreur peut être sensible à la monotonie des données; ce qui est le cas, par exemple, pour le code Miller Carré. Dans cette hypothèse, le cas le plus défavorable dans lequel l'enregistreur peut être amené à travailler est l'enregistrement d'une séquence continue variant lentement dans le temps.

Enfin dans les dispositifs de test classiques, la synchronisation est effectuée à partir d'un signal d'horloge généré à partir des éléments binaires reçus. Or pour certains types de codes, et c'est le cas du code Miller Carré, la génération du signal d'horloge à partir des éléments binaires reçus peut être difficile.

L'invention a principalement pour objet un dispositif de test plus performant permettant de tester toutes les pistes d'un enregistreur numérique multipiste en parallèle pour donner une mesure globale du taux d'erreur, qui comporte un dispositif d'analyse des erreurs détectées permettant de connaître la localisation de ces erreurs sur la bande enregistrée.

Selon l'invention, le dispositif de test pour enregistreur numérique multipiste est principalement caractérisé en ce qu'il comporte un premier générateur d'une séquence de nombres binaires relié à une sortie multiple d'émission pour émettre des données vers l'enregistreur à tester; un dispositif de stockage de données relié à une entrée multiple de ce dispositif de test, pour mettre en mémoire les données restituées par l'enregistreur testé; un second générateur de la même séquence de nombres binaires, un dispositif de comparaison de la séquence restituée et de la séquence émise relié d'une part à la sortie du dispositif de stockage et d'autre part à la sortie du second générateur; et un dispositif d'analyse d'erreur connecté à la sortie du dispositif de comparaison pour compter les erreurs introduites par l'enregistreur à tester et détectées par le dispositif de comparaison.

Des dispositifs complémentaires peuvent être prévus dans ce dispositif de test pour remédier aux inconvénients des dispositifs classiques et produire une séquence de test correspondant aux cas les plus défavorables pour l'enregistreur.

L'invention sera mieux comprise et d'autres caractéristiques apparaîtront à l'aide de la description qui suit en référence aux figures annexées.

La figure 1 est un schéma synoptique du dispositif de test;

La figure 2 représente un mode de réalisation de la partie émission du dispositif de test selon l'invention ;

La figure 3 représente la partie test proprement dite d'un mode de réalisation du dispositif de test selon l'invention.

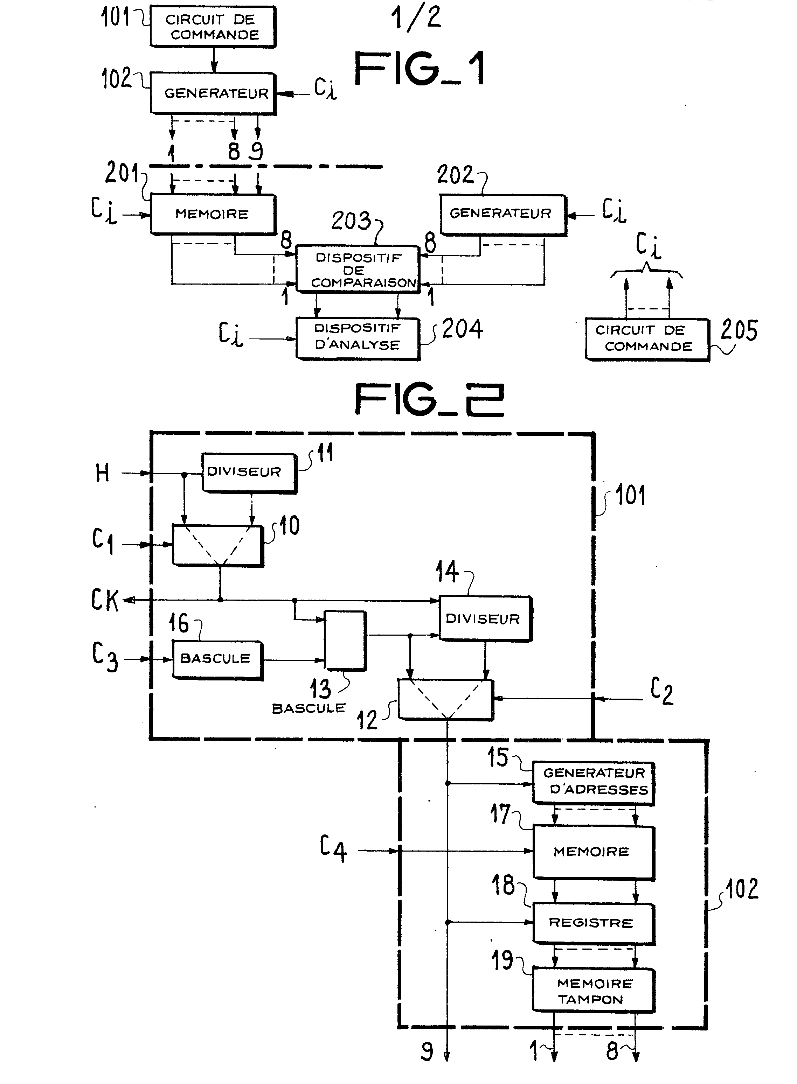

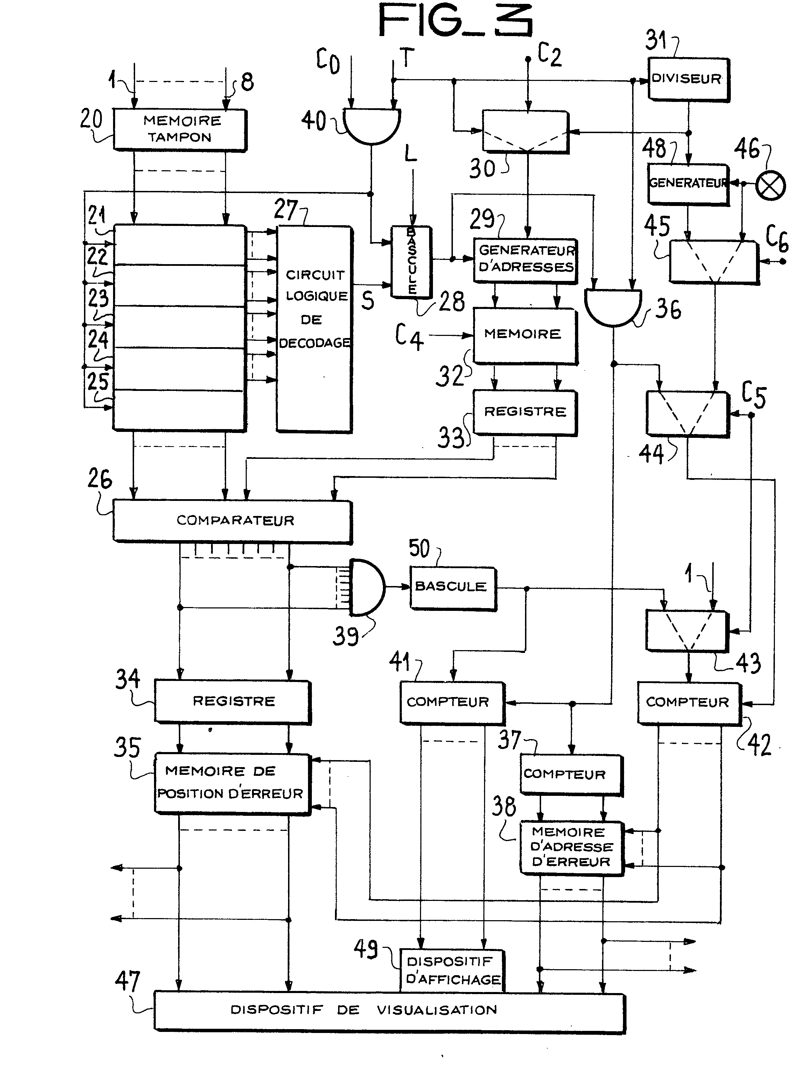

La figure 1 représente le schéma synoptique du dispositif de test selon l'invention qui comporte deux parties : une partie émission destinée à l'émission de données vers l'enregistreur à tester et une seconde partie, plus particulièrement destinée au test proprement dit à partir des données relues par l'enregistreur et transmises au dispositif de test.

La partie émission comporte principalement un circuit de commande 101 associé à un générateur 102 d'une séquence de nombres binaires pseudo-aléatoires ou en rampe, chaque nombre étant formé de plusieurs eb (éléments binaires) en parallèle, 8 par exemple. La partie test comporte une mémoire de stockage de données, 201, pour mettre en mémoire les données restituées par l'enregistreur testé, un second générateur 202 programmé de la même façon que le générateur 101, un dispositif de comparaison, 203, de la séquence restituée et de la séquence émise et un dispositif d'analyse d'erreur, 204, délivrant une mesure du taux d'erreur et permettant de localiser les erreurs détectées, ces dispositifs étant commandés par un circuit de commande 205.

La figure 2 représente en détails la partie émission du dispositif de test. Le circuit de commande 101 comporte une entrée d'horloge H, connectée d'une part à une entrée de signal d'un sélecteur 10, d'autre part à l'entrée d'un diviseur, 11, destiné à diviser la fréquence du signal d'horloge par n (64 par exemple). La sortie du diviseur 11 est reliée à la seconde entrée de signal du sélecteur 10. Ce sélecteur a une entrée de commande de vitesse $C_1$ qui permet de sélectionner l'un ou l'autre des deux signaux reçus par le sélecteur suivant la vitesse à laquelle on souhaite enregistrer les données : vitesse rapide (signal d'horloge H) ou vitesse réduite (signal d'horloge divisé par n). La sortie du sélecteur 10, qui fournit un signal d'horloge CK, est reliée d'une part à une première entrée d'un second sélecteur 12 par l'intermédiaire d'une bascule 13, d'autre part à une entrée d'un circuit diviseur, 14, divisant par m la fréquence du signal qu'il reçoit sur cette entrée (m 16 par exemple). La sortie de ce circuit diviseur est reliée à la seconde entrée de signal du sélecteur 12 qui sélectionne le mode d'émission du dispositif : mode séquentiel, les octets de la séquence étant émis successivement, ou mode répétitif, chaque octet de la séquence étant émis m fois, suivant l'état de l'entrée de commande de mode $C_2$ du sélecteur 12. La seconde entrée de la bascule 13 est reliée à l'entrée de commande d'émission, $C_3$, du dispositif de test par l'intermédiaire d'une bascule monostable 16. En effet, pour obtenir une bonne synchronisation pour la comparaison, un même octet est enregistré pendant une durée suffisante (10s par exemple), durée du palier introduit par la bascule monostable 16. La sortie de cette bascule 13 est également reliée à une entrée de forçage du circuit à diviseur 14. Ainsi pendant la durée du palier, la sortie du circuit diviseur 14, ne change pas d'état. L'entrée de commande de mode $C_2$ du sélecteur 12 permet donc de sélectionner le signal de commande appliqué à un générateur de séquence 102. Ce générateur de séquence comporte principalement un générateur d'adresses 15 associé à une mémoire morte 17 dans laquelle une séquence de nombres binaires a été enregistrée. Suivant l'état du signal de commande $C_2$, le générateur d'adresses est incrémenté à chaque impulsion du signal d'horloge CK ou seulement une impulsion sur m et ce, en dehors du palier introduit au début du fonctionnement. Ainsi les données stockées en mémoire à une adresse déterminée par le générateur d'adresses seront émises une fois ou répétées m fois, sauf pendant le palier où le générateur d'adresses est à zéro.

Pour tester l'enregistreur dans différentes conditions de fonctionnement, la séquence enregistrée comporte deux suites de nombres binaires : une suite pseudo-aléatoire et une suite variant de manière continue de façon qu'un seul élément binaire change à chaque pas de la progression du générateur d'adresses. A titre d'exemple, la mémoire peut avoir une capacité de $2^9$ octets et comporter une première suite pseudo-aléatoire de 256 octets et une seconde suite de 256 octets suivant une progression monotone, en rampe. La mémoire 17 comporte une entrée de commande $C_4$ pour la sélection de l'une ou l'autre de ces deux suites. Pendant la durée de fonctionnement en émission du dispositif de test, la période de rebouclage de la mémoire est la période d'une suite, soit 256 octets, c'est-à-dire qu'une même suite pseudo-aléatoire ou en rampe, est émise pour être enregistrée tant que le fonctionnement en émission n'est pas arrêté. Cette commande d'arrêt est obtenue sur la seconde position de l'interrupteur de commande $C_3$. La synchronisation du dispositif est obtenue par détection de la fin d'un palier. Pour cela lors de la mise en marche, du fait du palier généré, le générateur d'adresses n'est pas incrémenté. Par conséquent le même octet, présent à l'adresse 0 dans la mémoire, sera émis pendant toute la durée du palier. De plus, les deux suites enregistrées dans la mémoire morte sont telles que les octets enregistrés aux trois premières adresses de chaque suite sont les mêmes pour les deux suites, le premier étant dans les deux cas un octet de 0. Ainsi, la synchronisation peut être obtenue à partir des données reçues et non à partir d'un signal d'horloge reconstitué. La sortie multiple de

5 0032855

la mémoire programmée 17 est reliée à un registre de sortie 18 ayant une entrée d'horloge recevant le signal de sortie du sélecteur 12, les sorties de données de ce registre de sortie étant reliées aux entrées d'un registre mémoire tampon 19 dont les sorties sont reliées aux bornes 1 à 8 de sortie de données du dispositif de test. Une borne 9, sortie d'horloge, à connecter à l'enregistreur à tester avec les sorties de données, reçoit le signal de sortie du sélecteur 12 pour la commande de l'enregistrement.

La figure 3 représente en détails la partie test du dispositif selon l'invention. Elle comporte 8 bornes d'entrée de données et une borne d'entrée d'horloge T à connecter aux bornes de sortie lecture de données et sortie horloge de l'enregistreur à tester. L'entrée multiple de données est reliée à une mémoire tampon 20 dont la sortie multiple (8 bornes) est reliée à l'entrée multiple d'une pile de registres formée de 5 registres 21, 22, 23, 24 et 25, la sortie multiple du dernier registre de la pile étant reliée à une première entrée multiple d'un comparateur 26. La borne d'entrée d'horloge T est reliée à la première entrée d'une porte ET, 40, dont la seconde entrée est reliée à la borne de commande de marche $C_0$ du dispositif de test. La borne de sortie de cette porte ET 40, est reliée aux entrées d'horloge des registres 21 à 25, le signal de sortie de cette porte commandant le transfert des données d'un registre au suivant au rythme de sortie des octets de l'enregistreur. Les sorties des quatre premiers registres de la pile sont reliées aux entrées d'un circuit logique de décodage 27 dont la sortie fournit un signal de synchronisation, S, lorsqu'une suite déterminée de 4 octets correspondant au début de séquence est détectée. Cette suite peut être par exemple deux octets formés de 0 correspondant à la fin du palier de synchronisation dans les registres 24 et 23, et le premier et le second octet semblables des deux suites enregistrées présents respectivement sur les sorties des registres 22 et 21. Le signal de synchronisation S est appliqué à la première entrée d'une bascule 28 dont la seconde entrée est connectée à la sortie de la porte 40. Le dispositif comporte de plus une entrée de synchronisation, L, à connecter à une sortie correspondante de l'enregistreur et reliée à l'entrée d'horloge de la bascule 28.

Lorsque la suite de quatre octets correspondant à un début de séquence est détectée, la bascule 28 fournit un signal de synchronisation à un second générateur d'adresses 29. Ce signal déclenche le fonctionnement de ce générateur à partir de la première adresse de la suite pseudo-aléatoire ou en rampe sélectionnée comme précédemment. Ce générateur d'adresses reçoit par ailleurs un signal de commande d'avance qui, comme dans la partie émission, est soit le signal d'horloge T, si l'octet à générer change à chaque pas du signal d'horloge, soit le signal d'horloge divisé par m si le même octet a été répété m fois à l'enregistrement de façon qu'il soit également répété lors du test. Pour cela, l'entrée d'horloge T est connectée à une première entrée d'un sélecteur 30 et également à l'entrée de signal d'un diviseur par m, 31, la sortie de ce diviseur étant reliée à la seconde entrée du sélecteur 30. Le sélecteur a une entrée de commande recevant la même commande de mode $C_2$. La sortie du générateur d'adresses est reliée à l'entrée d'adressage d'une seconde mémoire morte 32 semblable à la première et programmée de la même manière, c'est-à-dire avec une première suite pseudo-aléatoire de nombres binaires et une seconde suite en rampe ayant les mêmes octets aux mêmes adresses. La mémoire 32 comporte, comme la première, une entrée de commande $C_4$ commandant l'émission de l'une ou l'autre de ces deux suites. La sortie multiple de la mémoire 32 est reliée à l'entrée d'un registre de sortie 33 dont la sortie multiple est reliée à la seconde entrée multiple du comparateur 26.

La comparaison est effectuée élément binaire à élément binaire, le comparateur fournissant sur chacune de ses huit sorties correspondant aux 8 eb de l'octet un 0 ou un 1 suivant que ces eb sont identiques ou non. Le dispositif d'analyse des erreurs comporte un registre de sortie 34, à huit étages connecté aux huit sorties du comparateur, et permet donc de localiser l'erreur ou les erreurs dans l'octet.

Par ailleurs les sorties du comparateur 26 sont reliées aux entrées d'une porte ET, 39, dont la sortie est reliée à l'entrée d'une bascule 50. cette bascule délivre une impulsion pour chaque octet dans lequel une ou plusieurs erreurs ont été détectées. La sortie de cette bascule est reliée à l'entrée de signal d'un compteur d'erreur 41 ayant par ailleurs une entrée d'horloge reliée à la sortie de la porte ET 36. Le compteur 41 indique donc, en temps réel, le nombre total d'erreurs détectées. Ce compteur a ses sorties reliées à un dispositif d'affichage 49. De plus, pour que ce dispositif d'analyse permette d'exploiter au mieux les résultats du test, le rang, dans la suite, de l'octet dans lequel une erreur a été détectée est mis en mémoire, en même temps que le contenu du registre 34 donnant la position de l'erreur dans l'octet. Pour cela un compteur d'octets 37 a son entrée de comptage reliée à la sortie de la porte ET 36. Le contenu de ce compteur indique donc en temps réel le rang de l'octet dans la suite d'octets délivrée par la mémoire programmée 32. Une mémoire adresse d'erreur, 38, est associée à ce compteur d'octets et une mémoire de position d'erreur 35 est associée au registre 34. Le transfert du contenu du registre 34 dans la mémoire 35 et le transfert du contenu du compteur d'octets 37 dans la mémoire 38 sont effectués en temps réel, lorsqu'une erreur est détectée dans l'octet analysé. Pour cela, la sortie de la bascule 50 est également couplée à l'entrée d'un compteur d'adresse mémoire 42 dont le contenu est augmenté à chaque erreur détectée et dont la sortie multiple indique l'adresse mémoire à laquelle sont enregistrés la position de l'erreur d'une part (dans la mémoire 35) et le rang de l'octet dans lequel cette erreur a été détectée d'autre part (dans la mémoire 38).

Le couplage de la sortie de la bascule 50 à l'entrée de comptage du compteur 42 s'effectue par l'intermédiaire d'un sélecteur 43 ayant une seconde entrée de signal recevant un signal de niveau constant (1) et une entrée de commande de sélection $C_5$. Le registre d'adresse mémoire 42 a par ailleurs une entrée d'horloge. Cette entrée d'horloge est reliée à la sortie d'un sélecteur 44 ayant une première entrée de signal reliée à la sortie de la porte ET, 36 (le signal de sortie de cette porte donnant le rythme de la séquence générée pendant la durée du test proprement dit) et une seconde entrée de signal recevant un signal donnant le rythme de sortie des données de la mémoire. Ce sélecteur 44 a une entrée de commande $C_5$, test/affichage. Pendant la durée du test l'entrée de comptage du compteur d'adresses mémoire, 42 est reliée à la sortie de la bascule 40 et reçoit donc des impulsions d'avance à chaque erreur. L'entrée de signal du sélecteur 43 recevant le signal de niveau constant est utilisée pour l'examen en temps différé. Dans le mode de réalisation précisément représenté sur la figure 3 l'examen en temps différé peut être effectué de deux manières différentes :

- pas à pas en visualisant pour chaque octet erroné le contenu des mémoires 35 et 38, à l'adresse correspondante, par affichage sur un dispositif de visualisation 47 faisant partie du dispositif de test,

- en affichant par blocs correspondant à un certain nombre d'erreurs (par exemple 256 erreurs) le contenu de ces mémoires 35 et 38, une prise multiple de sortie connectée à ces mémoires étant prévue pour afficher ces données sur un analyseur d'état logique extérieur au dispositif de test.

Pour l'examen en temps différé, l'adresse mémoire à laquelle ont été stockés d'une part l'octet représentant le résultat du test et d'autre part l'adresse de l'octet erroné dans la séquence est sélectionnée dans le compteur d'adresse mémoire 42. Pour cela, l'entrée d'horloge de ce compteur d'adresse mémoire reçoit, via la seconde entrée de signal du sélecteur 44, un signal donnant le rythme de sortie des données des mémoires 35 et 38.

Un sélecteur 45 a une entrée de commande $C_6$ permettant de choisir le mode d'affichage : pas-à-pas ou par blocs. L'entrée de ce sélecteur correspondant à l'affichage pas à pas est reliée à un bouton poussoir 46 tel que chaque pression provoque l'émission d'une impulsion provoquant l'incrémentation du registre adresse mémoire. Lors du basculement des sélecteurs 43 et 44 par la commande $C_5$ pour la passage du test à l'affichage, le registre adresse mémoire est remis à 0. Le dispositif d'affichage 47 relié aux sorties de données des mémoires 35 et 38 permet l'affichage de l'adresse de la première erreur et la localisation des éléments binaires concernés. Chaque pression sur le bouton poussoir permet d'avancer d'un pas dans la mémoire. Un tel examen est effectué lorsque le nombre d'erreurs relevé est assez faible.

Si le nombre d'erreurs relevé est grand, le sélecteur 45 est placé dans la position visualisation par blocs. Pour ce mode, un générateur d'impulsions 48 recevant un signal d'horloge, le signal de sortie du diviseur 31 par exemple, a sa sortie reliée à la seconde entrée du sélecteur 45. Si la visualisation s'effectue par blocs de 256 erreurs, 256 impulsions seront émises pour l'avance du registre adresse mémoire. Les sorties de données des mémoires 35 et 38 sont alors connectées à un analyseur d'état logique extérieur au dispositif de test lui-même. Le générateur 48 a une entrée de commande de mise en marche également reliée au bouton poussoir 46. Dans ce mode d'affichage, chaque pression sur ce bouton provoque la lecture d'un certain nombre d'erreurs mises en mémoire consécutivement et leur capture par l'analyseur d'état logique. L'opérateur peut examiner sur l'écran de l'analyseur le contenu des mémoires : lorsque les adresses des erreurs détectées dans la séquence se suivent, il est facile de déceler des erreurs en paquet qui peuvent porter sur le même élément binaire dans les différents octets ou sur des éléments binaires différents. Il est également facile de déceler les erreurs isolées.

Pour alléger les figures, les entrées de commande de remise à zéro des différents registres et compteurs n'ont pas été représentées, pas plus que les entrées d'alimentation des différents circuits logiques utilisés.

L'invention n'est pas limitée au mode de réalisation précisément décrit et représenté. En particulier, le dispositif décrit permet de tester 8 pistes en parallèle au maximum, mais cette disposition n'est évidemment pas limitative. De plus, le perfectionnement relatif à la synchronisation par introduction d'un palier avant l'enregistrement de la séquence de test, qui est très avantageux dans certains cas, peut cependant être remplacé par un dispositif de synchronisation utilisant un début de séquence de données, sans sortir du cadre de l'invention.

A titre d'exemple, le compteur d'erreurs,41, peut avoir une capacité de $2^{12}$ (4096), ce qui correspond à un taux d'erreur maximum de $10^{-6}$ pour 5 minutes d'enregistrement haute vitesse, la mémoire de position ayant une capacité correspondante : $2^{12}$ x 8, et les mémoires 38 et 42 ayant des capacités adaptées.

REVENDICATIONS

1. Dispositif de test pour enregistreur numérique multipiste, caractérisé en ce qu'il comporte un premier générateur d'une séquence de nombres binaires (102) relié à une sortie multiple d'émission, pour émettre les données vers l'enregistreur à tester; un dispositif de stockage de données (201) relié à une entrée multiple de ce dispositif de test, pour mettre en mémoire les données restituées par l'enregistreur testé; un second générateur (202) de la même séquence de nombres binaires; un dispositif de comparaison (203) de la séquence restituée et de la séquence émise relié d'une part à la sortie du dispositif de stockage et d'autre part à la sortie du second générateur; et un dispositif d'analyse d'erreur (204) connecté à la sortie du dispositif de comparaison pour compter les erreurs introduites par l'enregistreur à tester et détectées par le dispositif de comparaison.

2. Dispositif de test selon la revendication 1, caractérisé en ce que le dispositif de stockage comporte une pile de registres mémoire (21 à 25) pour garder en mémoire plusieurs nombres binaires successifs de la séquence restituée; et un dispositif logique de décodage (27) connecté aux sorties des registres mémoire ayant une sortie fournissant un signal de synchronisation (S) au second générateur et au dispositif de comparaison pour une succession prédéterminée de nombres reconnue comme un début de séquence.

3. Dispositif de test selon l'une quelconque des revendications 1 et 2, caractérisé en ce que les premier et second générateurs de séquence comportent chacun une mémoire (17 et 32) programmée avec une suite pseudo-aléatoire de nombres binaires.

4. Dispositif de test selon l'une quelconque des revendications 1 et 2, caractérisé en ce que les premier et second générateurs de séquence comportent chacun une mémoire (17 et 32) programmée avec une suite pseudo-aléatoire et une suite continue de nombres binaires, le dispositif de test comportant une entrée de commande ($C_4$) reliée à ces deux générateurs pour la sélection de l'une ou l'autre de ces deux suites.

5. Dispositif de test selon l'une quelconque des revendications précédentes, caractérisé en ce que les deux générateurs ont deux modes de fonctionnement, un mode séquentiel dans lequel les nombres binaires de la séquence sont émis successivement et un mode répétitif dans lequel les nombres binaires de la séquence sont émis plusieurs fois successivement, le dispositif de test comportant une entrée de commande de mode ($C_2$).

6. Dispositif de test selon l'une quelconque des revendications précédentes, caractérisé en ce que le dispositif d'analyse d'erreur comporte un compteur (41) des erreurs détectées et un dispositif de localisation de ces erreurs détectées, ce dispositif de localisation comportant un compteur (37) de nombres binaires restitués fournissant à chaque instant le rang du nombre binaire analysé dans la séquence, et deux mémoires de stockage (38 et 35) connectée à ce compteur (37) d'une part et au dispositif de comparaison (34, 26) d'autre part, ces mémoires comportant une entrée de commande couplée à la sortie du dispositif de comparaison pour commander la mise en mémoire des adresses des nombres binaires dans lequels des erreurs sont détectées d'une part et la position des erreurs détectées dans chaque nombre erroné d'autre part.

7. Dispositif de test selon la revendication 6, caractérisé en ce qu'il comporte en outre un dispositif d'affichage (47,49) couplé au compteur des erreurs détectées (41) et aux mémoires de stockage (35 et 38).

8. Dispositif de test selon la revendication 6, caractérisé en ce qu'il comporte une sortie multiple d'analyse connectée au compteur d'erreur d'une part, et aux mémoires de stockage d'autre part, cette sortie multiple étant destinée à être connectée à un analyseur d'état logique.

0032855

1/2

FIG_1

FIG_2

FIG_3

2/2

0032855

| Catégorie | Citation du document avec indication, en cas de besoin, des parties pertinentes | Revendication concernée |
|---|---|---|
| **DOCUMENTS CONSIDERES COMME PERTINENTS** | | |
| X | US - A - 3 517 305 (SCHWARTZ & ZUSSMAN)<br><br>* Figures 1-5, colonne 2, ligne 19 - colonne 4, ligne 2 *<br><br>-- | 1-3, 6-8 |
| | FR - A - 1 399 447 (CIE. FRANCAISE THOMSON-HOUSTON)<br><br>* Figures 1,2; page 2, colonne de gauche, ligne 14 - page 4, colonne de droite, dernier alinéa *<br><br>-- | 1,3,6, 8 |
| | US - A - 3 938 183 (HUST et HEBERLING)<br><br>* Figures 1,2; colonne 2, dernier alinéa - colonne 4, ligne 47 *<br><br>-- | 1,3,6-8 |
| | INSTITUTE OF ELECTRICAL AND ELECTRONIC ENGINEERS, International Symposium on Fault-Tolerant Computing; systems, software, hardware, practical results, research; 21-23 juin 1976 Pittsburgh, Pa., US PARKER: "Compact testing; testing with compressed data", pages 93-98<br><br>* En entier *<br><br>-- | 1,3,6, 8 |
| | IEEE TRANSACTIONS ON COMPUTERS, vol. C-27, no. 6, juin 1978 New York, US LOSQ: "Efficiency of Random Compact Testing", pages 516-525<br><br>./. | 1,3,6, 8 |

**CLASSEMENT DE LA DEMANDE (Int. Cl.³)**

G 11 B 5/09

**DOMAINES TECHNIQUES RECHERCHES (Int. Cl.³)**

G 11 B  5/09
G 06 F  11/26
G 11 B  5/43

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 27-04-1981 | CARTRYSSE |

OEB Form 1503.1   06.78

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| | * Figures 1,2; page 516, colonne de droite, dernier alinéa – page 517, colonne de droite, dernier alinéa * <br><br> -- | | |
| A | IBM TECHNICAL DISCLOSURE BULLETIN, vol. 3, no. 8, janvier 1961 New York, US HART et MacDOUGALL: "Tape systems error correction", pages 10,11 | 1 | |
| A | US - A - 2 936 443 (WEIR) | 1 | DOMAINES TECHNIQUES RECHERCHES (Int. Cl. 3) |
| A | FR - A - 2 295 492 (HONEYWELL INFORMATION SYSTEMS INC.) | 1 | |
| A | IBM TECHNICAL DISCLOSURE BULLETIN, vol. 18, no. 6, novembre 1975 New York, US HODGES et SCHWARZ: "Pseudo-Random Recording Channel", pages 1987-1988 | 1 | |
| A | US - A - 3 506 814 (MacDONALD et al.) | 1 | |
| A | US - A - 3 530 384 (ZUSSMAN) | 1 | |
| A | COMPUTER DESIGN, vol. 14, no. 4, avril 1975 Concord, Mass., US CHIANG: "Test Schemes for Micro-processor Chips", pages 87-92 <br> * En entier * | 1 | |
| A | IBM TECHNICAL DISCLOSURE BULLETIN, vol. 7, no. 10, mars 1965 New York, US WOLFF: "Parallel I/O Error Detection and Correction", pages 927-928 <br><br> ---- | 1 | |

OEB Form 1503.2   06.78